# EUROPÄISCHE PATENTSCHRIFT

(11) **EP 1 243 774 B1**
(45) Veröffentlichungstag und Bekanntmachung des Hinweises auf die Patenterteilung: **11.07.2007**
(21) Anmeldenummer: 02006056.2
(22) Anmeldetag: 16.03.2002
(51) Int. Cl.: F02D 9/10, F02M 31/10

(54) **Beheizbare Drosselvorrichtung für Brennkraftmaschinen**
Heatable throttle device for internal combustion engines
Dispositif d'étranglement chauffant pour moteurs à combustion interne

(30) Priorität: 23.03.2001 DE 10114221
(43) Veröffentlichungstag der Anmeldung: 25.09.2002
(73) Patentinhaber: ROBERT BOSCH GMBH, 70442 Stuttgart (DE)
(72) Erfinder: Michels, Markus, 70178 Stuttgart (DE)
(74) Vertreter: Hörschler, Wolfram Johannes

(56) Entgegenhaltungen:
- EP-A- 0 400 212
- EP-A- 1 126 154
- PATENT ABSTRACTS OF JAPAN vol. 1996, no. 09, 30. September 1996 (1996-09-30) & JP 08 135506 A (NIPPONDENSO CO LTD), 28. Mai 1996 (1996-05-28)
- PATENT ABSTRACTS OF JAPAN vol. 2000, no. 13, 5. Februar 2001 (2001-02-05) & JP 2000 297661 A (AISAN IND CO LTD), 24. Oktober 2000 (2000-10-24)

## Beschreibung

### Technisches Gebiet

Bei in Fahrzeugen eingesetzten Verbrennungskraftmaschinen wird heutzutage eine Drosselvorrichtung verwendet, die in der Regel als kreisförmige Klappe beschaffen, am Ansaugtrakt der Verbrennungskraftmaschine aufgenommen ist und den anzusaugenden für die Verbrennung erforderlichen Volumenstrom von Frischluft dosiert. Bedingt durch die hohen Strömungsgeschwindigkeiten des Frischluftstromes und bei niedrigen Außentemperaturen kann das in der Frischluft enthaltene H₂O an der Wandung des Rohres kondensieren; bei weiterer Abkühlung kann sich im Inneren der Frischluftleitung Eis bilden, was die Leichtgängigkeit einer Drosselklappe erheblich beeinträchtigen kann.

### Stand der Technik

DE 33 46 167 A1 bezieht sich auf einen Drosselklappenstutzen. Bei einem Drosselklappenstutzen gemäß dieser Lösung ist eine Drosselklappe auf einer Welle angeordnet, die wiederum beidseitig im Stutzengehäuse durch Gleitlager fixiert ist. Diese Gleitlager sind jeweils in einer Wellenbohrung eingepresst und weisen drosselklappenseitige Stirnflächen auf, die entsprechend der Wandung der Gehäusebohrung gekrümmt sind und einen Teil dieser Wandung bilden. Durch diese Gestaltung der Gleitlager ist die Leckrate dieses Drosselklappenstutzens gemäß DE 33 46 167 A1 äußerst gering.

DE 198 43 771 A1 bezieht sich auf ein elektromotorisches Stellglied insbesondere mit einer Drosselklappe. Es wird ein elektromotorisches Stellglied offenbart mit einem Gehäuse und einem auf einer Antriebsseite innerhalb des Gehäuses angeordneten Elektromotor für den Antrieb eines in dem Gehäuse angeordneten beweglichen Elementes. Bei diesem beweglichen Element handelt es sich insbesondere um eine Drosselklappe, wobei erfindungsgemäß vorgesehen wird, daß an dem Gehäuse ein separates Elektronikgehäuse zur Aufnahme einer Steuer- und/oder Auswerteelektronik befestigbar ist. Damit lassen sich einerseits insbesondere elektromagnetische Störeinstrahlungen vermeiden und andererseits können serienmäßig hergestellte und kein Steuergerät benötigende elektronische Stellglieder weiter verwendet werden, ohne daß Änderungen an der Form zur Herstellung des Stellgliedes erforderlich sind.

Schließlich ist aus DE 29 49 041 B1 eine Heizung zur Gemischaufbereitung bei Gemischbildnem bekannt geworden. Gemäß dieser Lösung handelt es sich um eine Heizung zur Gemischaufbereitung bei Brennkraftmaschinen-Gemischbildnern mit einer einen Hauptstrom begrenzenden Rohrwandung und mit einem Hauptdrosselglied stromab sowie einer Kraftstoffzuteilungseinrichtung im stromauf befindlichen Teil einer Mischkammer. Diese ist über einen Teil dieser Längserstreckung als Wärmetauscherdoppelwandung mit einem ringförmigen Heizwasserraum ausgebildet, der an seinem einen Ende einen Wasserzulaufstutzen und an seinem anderen Ende einen Wasserablaufstutzen aufweist. Der Wärmetauscher ist über ein thermisch gesteuertes, ab höheren Temperaturen öffnendes Zuschaltventil mit einem Kühlwasserkreislauf verbunden. Er befindet sich bei gesperrtem Zuschaltventil sowie bei abgeschaltetem Kühlwasserkreislauf oberhalb des Kühlwasserniveaus. Die an den Hauptstrompfad des Gemischbildners angrenzende Innenwandung des Wärmetauschers besteht aus einem elektrischen Heizwiderstandsmaterial und ist über ein in Abhängigkeit von der Kühlwassertemperatur thermisch gesteuertes, ab einer bestimmten höheren Wassertemperatur öffnendes elektrisches Schaltglied mit einer Spannungsquelle elektrisch verbunden.

JP-A 08 135 506 hat eine Drosselvorrichtung zum Gegenstand, bei welcher durch Zusammenfügen zweier Gehäuseteile ein Hohlraum zum Beheizen des Gehäuses gebildet wird. Innerhalb des Hohlraums sind Rippen an der Außenseite der den Strömungsquerschnitt umschließenden Wandung ausgebildet.

### Vorteile der Erfindung

Die Vorteile der erfindungsgemäßen Lösung sind vor allem darin zu erblicken, daß die Kanäle bzw. Hohlräume, in denen ein Heizmedium strömt, bereits bei der Herstellung der Drosselvorrichtung für eine Verbrennungskraftmaschine gefertigt werden können, so daß sich eine zerspanende Bearbeitung des Vollmaterials des Drosselgehäuses erübrigt. Bei nachträglich durch Aufbohren oder Fräsen erzeugten Heizkanälen am Drosselgehäuse aus Vollmaterial ist man hinsichtlich des Verlaufs der Heizkanäle an die Geometrie des Gehäuses gebunden, was unter Umständen dazu führen kann, daß aufgrund in größerer Wandstärke verbleibende Bereiche des aus Vollmaterial bestehenden Drosselgehäuses, eine nur ungleichmäßig verlaufende Beheizung der Wandung der Drosselplattenbohrung erzielbar ist.

Mit der erfindungsgemäß vorgeschlagenen Lösung werden die Heizkanäle bei der Fertigung im Bereich zwischen Außenwand und Drosselklappenbohrung so geformt, daß sie die Passage eines Heizmediums sowohl parallel zur Strömungsrichtung des Frischluftstromes als auch - falls notwendig - senkrecht zur Strömungsrichtung eines in Strömungsquerschnitt strömenden Fluidstroms erlaubt. In vorteilhafter Ausgestaltung der erfindungsgemäßen Lösung können die einzelnen Hohlräume zwischen der Außenwandung der Drosselvorrichtung und der Drosselklappenbohrung durch Absenken der die Hohlräume unterteilenden Stege miteinander verbunden werden, so daß sich durch Überströmvorgänge an der Wandung der Drosselklappenbohrung ein gleichmäßiges Temperaturprofil auszubilden vermag. Bei der Montage werden die Hohlräume auf der offenen Seite z.B. durch einen Dichtring oder durch Anbau an ein weiteres Bauteil abgedichtet. Bei der Fertigung des Drosselgehäuses als Gußteile können beim Gießen die zum Anschluß der Heizung notwendigen Zu- und Ablaufanschlüsse von Außen in bezug auf die Hohlräume derart positioniert werden, daß sie die zu beheizende Fläche der Drosselklappenwandung definieren. Durch eine Verlegung der Anschlüsse kann die Heizfläche verändert werden.

Mit der gemäß der erfindungsgemäßen Lösung genommenen Anordnung von Hohlräumen bzw. Heizkanälen zwischen der Außenwandung des Drosselgehäuses und der Wandung der Drosselklappenbohrung kann eine gleichmäßig verlaufende Temperierung der Wandung der Drosselklappenbohrung erzielt werden. Pro Hohlraumsegment kann einer der Lage der Zu- bzw. Ablaufanschlüsse des Heizmediums entsprechende Temperierung der Wandung der Drosselklappenbohrung erfolgen. Die in extrem dünner Wandungsstärke ausgebildete Wandung der Heizflächen, d.h. der Begrenzungswände der Drosselklappenbohrung erlauben eine kurze Ansprechzeit und somit eine schnelle Temperaturänderung an der Wandung der Drosselklappenbohrung.

### Zeichnung

Anhand der Zeichnung wird die Erfindung nachstehend näher erläutert.

Es zeigt:
- Figur 1: die sich parallel zur Strömungsrichtung des Fluidstroms erstreckenden Heizkanäle am Umfang der Drosselklappenbohrung,
- Figur 2: einen beheizten Flächenbereich am Umfang der Drosselklappenbohrung,
- Figur 3: eine perspektivische Ansicht einer Gehäusehalbschale mit die Hohlräume für das Heizmedium verschließenden Dichtelement,
- Figur 4: ein Querschnitt durch die Darstellung gemäß Figur 3,
- Figur 5: eine Ausführungsvariante einer Drosselvorrichtungsunterschale der Halbschale mit erweitertem Heizbereich in Umfangsrichtung,
- Figur 6: die perspektivische Wiedergabe einer Gehäusehalbschale der Drosselvorrichtung und
- Figur 7: ist eine Schnittdarstellung der Forrichtung gemäß Figur 6.

### Ausführungsvarianten

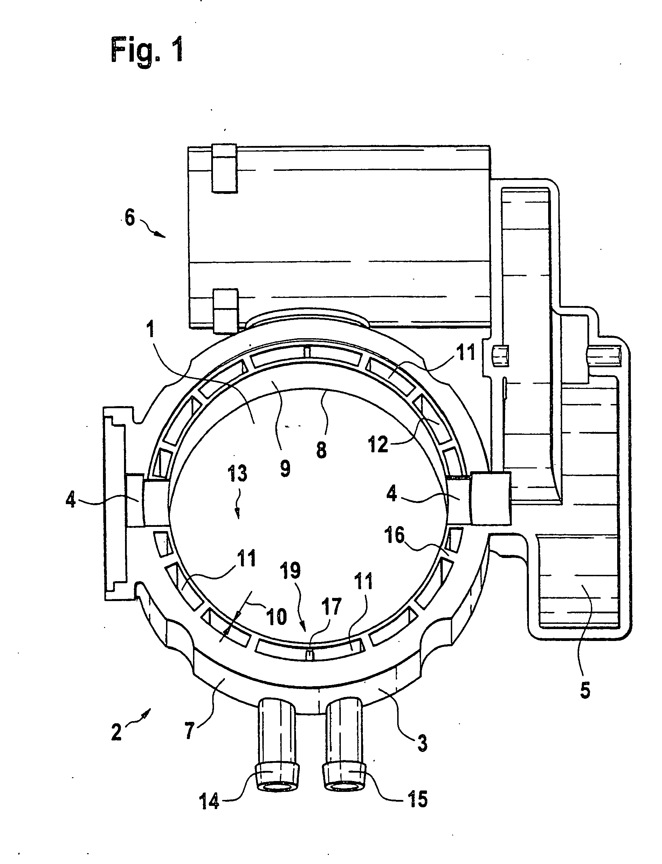

Der Darstellung gemäß Figur 1 sind die sich parallel zur Strömungsrichtung des Fluidstromes erstreckenden Hohlräume am Umfang einer Drosselklappenbohrung entnehmbar.

Gemäß dieser Darstellung ist eine Gehäusehalbschale 3 eines Drosselklappengehäuses 2wiedergegeben. Ein freier Strömungsquerschnitt 1 einer Drosselklappenbohrung 8 wird von einer Innenwandung 9 begrenzt. An der Gehäusehalbschale 3 des Drosselklappengehäuses 2 sind zwei einander gegenüberliegende Drosselwellenlagerbohrungen 4 vorgesehen, in welche eine hier nicht dargestellte Drosselklappe eingelegt wird. Die Drosselklappe ist an einer hier ebenfalls nicht dargestellten Drosselklappenwelle aufgenommen, die mittels eines Stellantriebs betätigbar ist. Zur Aufnahme des Stellantriebes ist an der Gehäusehalbschale 3 seitlich ein Aufnahmeraum 5 vorgesehen; ferner befindet sich an der Gehäuseschalbschale 3 gemäß der Dastellung in Figur 1 ein Gehäuseraum 6, der den Antrieb zum Verstellen die Drosselklappe aufnimmt. Zwischen der Außenwandung 7 der Gehäusehalbschale 3 und der Innenwandung der Drosselklappenbohrung 8 sind am Umfang der Drosselklappenbohrung 8, verteilt sich im wesentlichen in Strömungsrichtung 13 eines Fluidstromes erstreckende Hohlräume 11 ausgebildet. Die Hohlräume 11 können über einen Zulauf 14 bzw. einen Ablauf 15 mit einem Heiz- oder einem Kühlmedium beaufschlagt werden. Die Innenwandung 9 ist zur Sicherstellung eines optimalen Wärmeüberganges in geringer Wandstärke 10 ausgebildet. Zwischen den einzelnen Hohlräumen 11, die am Umfang der Drosselklappenbohrung 8 in der Gehäuseunterschale 3 ausgebildet sind, sind einzelne Stege 16 bzw. abgesenkte Stege 17 ausgebildet.

Die Gehäusehalbschale 3 eines Drosselklappengehäuses 2 gemäß der Darstellung in Figur 1 sowie die darin aufgenommenen Räume 5 bzw. 6 zur Aufnahme von Antriebs- bzw.

Stellantriebselementen werden vorzugsweise-gemäß eines Gießverfahrens oder mittels des Kunststoffspritzgießens sei es Ein-Komponenten- oder Zwei-Komponentenspritzgießverfahren gefertigt. Diese Verfahren ermöglichen in optimaler Weise die Hohlräume möglichst nah an der die Drosselklappenbohrung 8 begrenzenden Innenwandung 9 auszubilden, so daß das durch die Hohlräume 11 srömende Heiz- bzw. Kühlmedium unmittelbar an die zu beheizende bzw. zu kühlende Wandung 9 die einen Strömungsquerschnitt 1 begrenzt, herangeführt werden können.

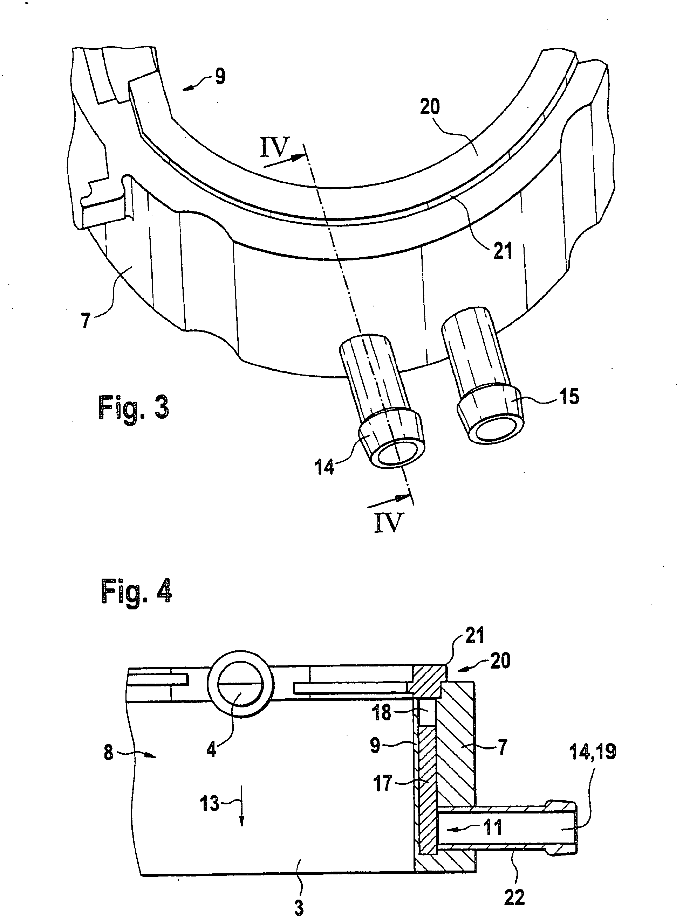

Aus der Darstellung gemäß Figur 3 geht ein beheizter Flächenbereich am Umfang einer Drosselklappenbohrung näher hervor.

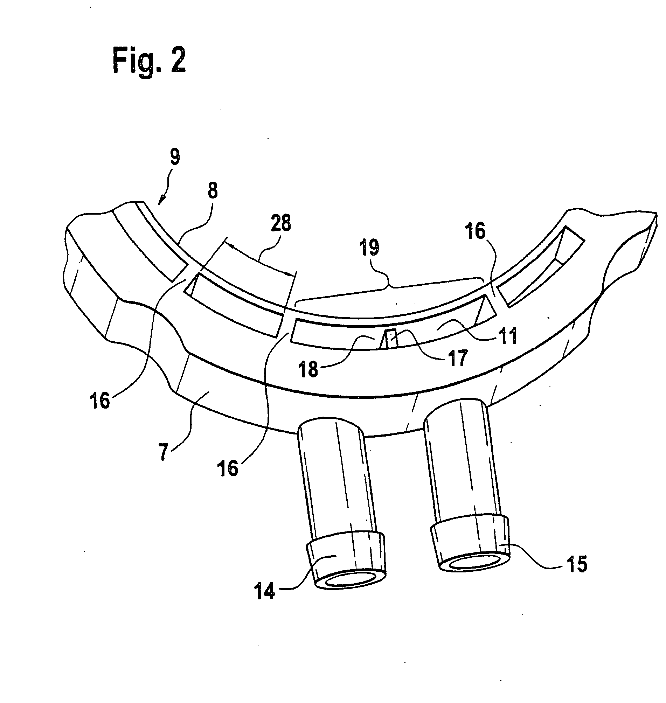

Gemäß der Darstellung in Figur 2 wird ein beheizter Flächenbereich 19 der Innenwandung 9 der Drosselklappenbohrung 8 durch zwei Stege 16 begrenzt. Zwischen den beiden Stegen 16 befindet sich ein abgesenkter Steg 17, der im Vergleich zu den durchgängig ausgebildeten Stegen 16 eine Überströmöffnung bzw. einen Überströmkanal 18 definiert. Über die am Außenumfang 7 vorgesehenen Zulauf 14 tritt ein Heiz- bzw. Kühlmedium in die Hohlräume 11 ein, durchströmt diesen senkrecht zur Zeichenebene und strömt über den durch den abgesenkten Steg 17 gebildeten Überströmkanal 18 in den benachbart zum abgesenkten Steg 17 liegenden Hohlraum 11 über. Von diesem Hohlraum aus strömt das Heiz- bzw. Kühlmedium über den Ablauf 15 wieder ab. Die den beheizten Flächenbereich bildenden Hohlräume 11 sind in optimaler Weise so beschaffen, daß eine möglichst optimal an die gekrümmte Kontur der Innenwandung 9 der Drosselklappenbohrung 8 verlaufende Beheizungs- bzw. Kühlungsfläche für das eine Drosselklappenbohrung 8 im freien Strömungsquerschnitt 11 passierende Medium erzielt werden kann. Durch die beidseits der Hohlräume 11, die im Bereich von Zulauf 14 bzw. Ablauf 15 liegen, sich durchgängig erstreckenden Stege 16, ist der beheizbare Flächenbereich der Innenwandung 9 auf die durch Zulauf 14 bzw. den Ablauf 15 mit einem Heiz- bzw. Kühlmedium versorgbaren Hohlräume 11 begrenzt. Mit Bezugszeichen 28 ist die Hohlraumweite eines Hohlraumes 11 identifiziert, der benachbart zum Steg 16 neben dem Zulauf 14 für das Heiz- bzw. Kühlmedium angeordnet ist. Je nach Lage von Zu- bzw. Ablauf 14, 15 kann der beheizbare Flächenbereich 19 der Innenwandung 9 der Drosselklappenbohrung 8 definiert werden. Der Wärmetransport erfolgt bei Ausbildung der Innenwandung 9 der Drosselklappenbohrung 8 in geringer Wandstärke 10 im wesentlichen durch Wärmeleitung, wobei dieser Wärmeübergang aufgrund der geringen Wandungsstärke 10 der Innenwandung 9 der Drosselklappenbohrung 8 sehr schnell erfolgt.

Figur 3 zeigt eine perspektivische Ansicht einer Gehäusehalbschale mit die Heizkanäle verschließendem Dichtelement.

Gemäß der Darstellung in Figur 3 sind die in den Darstellungen gemäß der Figuren 1 und 2 offenen Hohlräume 11 mittels eines sich ringförmig um die geschnitten dargestellte Gehäusehalbschale 3 erstreckenden Dichtelementes 20 verschlossen. Die eine am Dichtelement 20, welches vorzugsweise in Ringform ausgebildet ist, ausgebildete Dichtlippe 21 liegt dichtend auf einer planen Stirnfläche der Gehäusehalbschale 3 auf. An der Außenwandung 7 der Gehäusehalbschale 3 eines Drosselklappengehäuses 2 sind die einen beheizbaren Flächenbereich 19 definierenden Zu- bzw. Abläufe 14, 15 ausgebildet. Diese können entweder als in die Außenwandung 7 einsteckbare Anschlüsse ausgebildet werden; daneben besteht die Möglichkeit, den Zulauf 14 bzw. den Ablauf 15 auch unmittelbar beim Gießen der Gehäusehalbschale 3 oder beim Spritzgießen der Gehäusehalbschale 3 auf diesem Wege durch Urformverfahren auszubilden.

Der Darstellung gemäß Figur 4 ist ein Querschnitt durch die Darstellung der Gehäusehalbschale gemäß Figur 3 zu entnehmen.

Die Gehäusehalbschale 3 wird von einem Fluidstrom in Strömungsrichtung 13 durchströmt, wobei der Volumenstrom des den freien Strömungsquerschnitt 1 der Gehäusehalbschale 3 passierenden Fluidstroms mittels eines schwenkbar in der Drosselklappenbohrung 4 gelagerten Drosselklappenelementes variierbar ist. In die Wandung der Gehäusehalbschale 3 sind Zu- bzw. Abläufe 14, 15 (z. B. eingesetzte Stutzen 22) integriert, welche die Wandung der Gehäusehalbschale 3 zum größten Teil durchsetzen und mit in der Wandung befindlichen Hohlräumen 11 in Verbindung stehen. Die Hohlräume 11 sind gemäß der Schnittdarstellung in Figur 4 durch einzelne Stege 16 bzw. 17 voneinander getrennt. Gemäß der Darstellung in Figur 4 gibt ein abgesenkter Steg 17 in seinem oberen, dem Dichtelement 20 zugewandten Bereich einen Überströmkanal 18 frei, durch welchen ein in einen Hohlraum 11 über den Zulauf 14 eintretendes Heiz- bzw. Kühlmedium in den zum abgesenkten Steg 17 benachbarten Hohlraum 12 am Umfang der Drosselklappenbohrung 8 überströmen kann. Je nach Abstand von Zulauf 14 bzw. Ablauf 15 an der Außenwandung 7 der Gehäusehalbschale 3 stellt sich ein in Umfangsrichtung einen größeren oder kleineren Winkelbereich überstreichender beheizbarer Flächenbereich 19 ein. Neben einer Abdichtung der Hohlräume 11, 12 bzw. der Überströmkanäle 18 im Bereich von abgesenkten Stegen 17 am Umfang der Drosselklappenbohrung 8 können die Hohlräume 11, 12 auch durch angrenzende ringförmige Bauteile abgedichtet werden, ohne daß das Vorsehen eines separaten im wesentlichen ringförmig ausgebildeten Dichtelementes 20 erforderlich ist. Am Dichtelement 20 befindet sich eine Dichtlippe 21, welche in radiale Richtung die Hohlräume 11, 12 überdeckt und diese damit sowohl in axiale Richtung als auch in radiale Richtung in bezug auf die Strömungsrichtung 13 des Fluidstromes durch den freien Strömungsquerschnitt 1 der Drosselklappenbohrung 8 abdichtet.

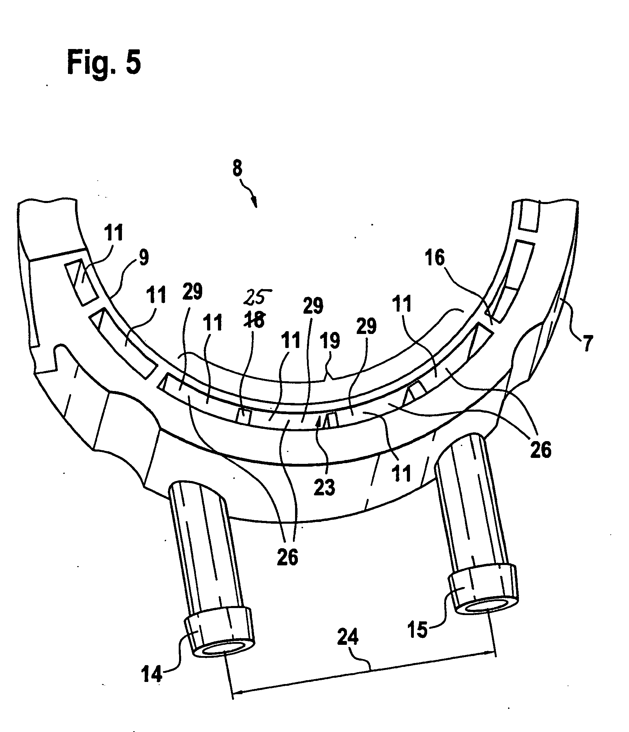

Der Darstellung gemäß Figur 5 ist eine Ausführungsvariante einer Drosselvorrichtung einer Drosselgehäusehalbschale entnehmbar mit erweiterten Heiz- bzw. Kühlbereich in Umfangsrichtung.

Gemäß der Darstellung in Figur 5 sind der Zulauf 14 sowie der Ablauf 15 an der Außenwandung 7 einer Gehäusehalbschale 3 in einem erweiterten Abstand 24 zueinander orientiert. Mittels dieser Ausführungsvariante läßt sich an der Innenwandung 9 der Drosselklappenbohrung 8 ein ebenfalls mit Bezugszeichen 19 identifizierter, einen größeren Winkelbereich überstreichender beheizbarer Flächenbereich erzielen. Über die in einem erweiterten Abstand 24 zueinander am Außenumfang 7 vorgesehenen Zu- bzw. Abläufe 14, 15 lassen sich vier nebeneinander liegende Hohlräume 11 beheizen bzw. kühlen. Die jeweils außen liegenden Hohlräume 11 sind durch durchgängige Stege 16 begrenzt, während zwischen den Hohlräumen 11 weitere abgesenkte Stege 25 vorgesehen sind. Durch Einströmen eines Heiz- bzw. Kühlmediums über den Zulauf 14 vermag das Heiz- bzw. Kühlmedium über die in den weiteren abgesenkten Stegen 25 ausgebildeten Überströmkanäle 18 in die benachbarten Hohlräume 11 einströmen, bis es in den Hohlraum 11 einströmt, der von einem durchgehenden Steg 16 begrenzt ist. Von diesem Hohlraum 11 strömt das Heiz- bzw. Kühlmedium über den Ablauf 15 wieder ab. Der Wärmetransport erfolgt vom Heiz- bzw. Kühlmedium über die der Innenwandung 9 abgewandten Flächenbereiche 26 der Hohlräume 11. Durch die geringe Wandstärke 10, in der die Innenwandung 9 der Drosselklappenbohrung 8 ausgebildet ist, wird ein optimaler Wärmeübergang von Heiz- bzw. Kühlmedium, welches die Hohlräume 11 am Umfang der Drosselklappenbohrung 8 durchstörmt, an die Innenwandung 9 der Drosselklappenbohrung 8 erreicht, so daß je nach Anordnung der Zu- bzw. Abläufe 14 bzw. 15 gemäß der Figuren 2 oder 5 eine sich in Umfangsrichtung erstreckende, unterschiedlich große Heizzone 19 erzielen läßt. Durch das Herstellen von Hohlräumen 11 während der Formgebung der Gehäuseunterschale 3 läßt sich die Konfiguration der Hohlräume 11 in optimaler Weise an die Wandkrümmung 23 der Innenwandung 9 der Drosselklappenbohrung 8 anpassen.

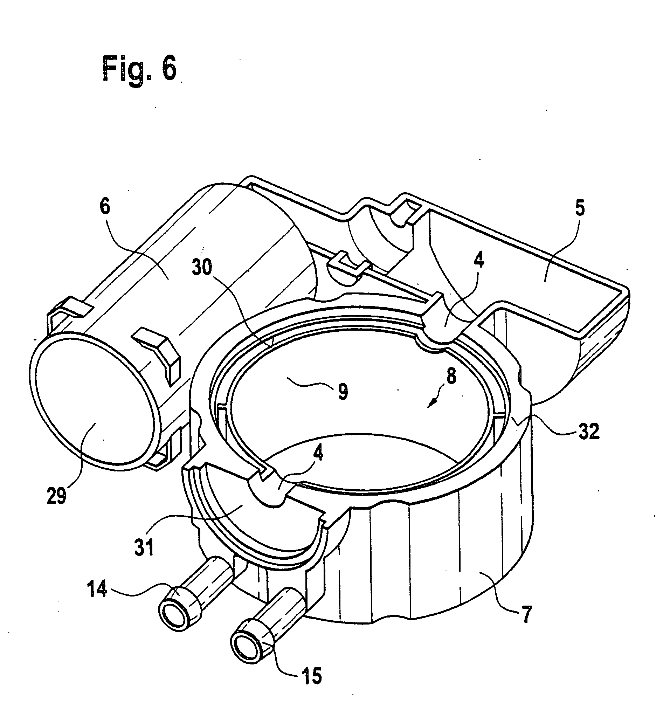

Der Darstellung gemäß Figur 6 ist eine perspektivische Wiedergabe einer Gehäuseunterschale einer Drosselvorrichtung entnehmbar.

Aus dieser Darstellung geht hervor, daß oberhalb von am Außenumfang 7 der Gehäuseunterschale 3 angespritzten oder angegossenen Zuläufen 14, 15 ein Lager 31 für eine in der Drosselwellenlagerbohrung 4 aufzunehmende Drosselklappenwelle vorgesehen ist. An der im Lager 31 gegenüberliegenden Seite der Gehäuseunterschale 3 ist ein Aufnahmeraum 5 (vergleiche Darstellung gemäß Figur 1) angegossen oder angespritzt, in welchem Stellantriebselemente, die eine Schwenkbewegung der Drosselklappenwelle 11 mit daran aufgenommener. Drosselklappe 11 in den Drosselklappenlagern 4 bewirken. In einem ebenfalls angespritzten Gehäuseraum 6, der über eine Öffnung 29 zugänglich ist, kann der den Stellantrieb 5 beaufschlagende Antrieb zur Bewegung der Drosselklappe aufgenommen werden. Bezugszeichen 32 bezeichnet die Stirnfläche der Gehäuseunterschale, auf welche nach Montage der Drosselklappe in den Drosselklappenwellenlagern 4 eine hier nicht dargestellte Gehäuseoberschale der Drosselvorrichtung aufgelegt wird.

In der Darstellung gemäß Figur 6 sind Zulauf 14 bzw. Ablauf 15 in die Außenwandung 7 der Gehäuseunterschale 3 angegossen bzw. angespritzt, mithin in diese integriert.

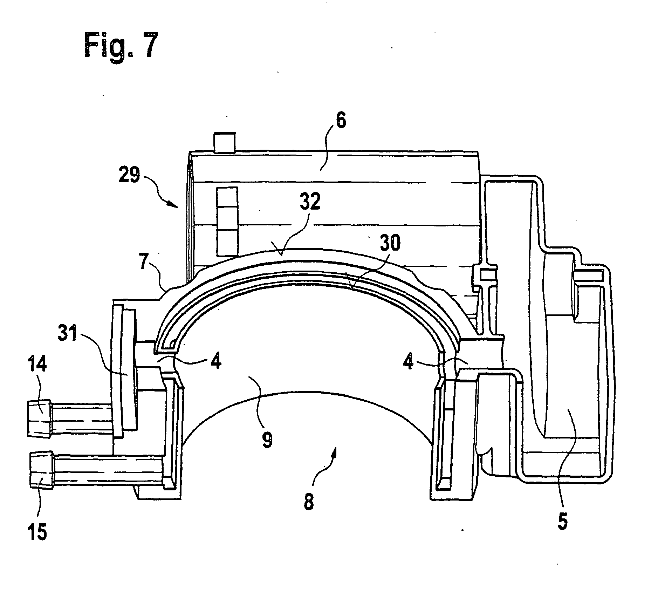

Der Darstellung gemäß Figur 7 sind darüber hinaus die bereits in Figur 6 wiedergegebenen Anbauräume 5 bzw. 6 für die Antriebskomponenten einer hier nicht dargestellten im freien Strömungsquerschnitt 1 der Drosselklappenbohrung 8 verschwenkbaren Drosselklappe zu entnehmen. Durch eine Verlagerung von Zulauf 14 bzw. Ablauf 15 für das Heiz- bzw. Kühlmedium läßt sich die zu beheizende Fläche 19 an der Innenwandung 9 der Drosselklappenbohrung 8 verlagern. Neben der Ausbildung der das Heiz- bzw. Kühlmedium führenden Hohlräume 11 parallel zur Strömungsrichtung 13 eines Fluidstroms durch die Drosselklappenbohrung 8 können die Hohlräume 11 auch die Drosselklappenbohrung 8 umgebend ausgebildet werden.

### Bezugszeichenliste

- 1: Strömungsquerschnitt
- 2: Drosselklappengehäuse
- 3: Gehäusehalbschale
- 4: Drosselwellenlagerbohrung
- 5: Raum für Stellantrieb
- 6: Gehäuseraum
- 7: Außenwandung
- 8: Drosselklappenbohrung
- 9: Innenwandung
- 10: Wandstärke
- 11: Hohlraum
- 12: Hohlraumsegment
- 13: Strömungsrichtung Fluidstrom
- 14: Zulauf
- 15: Ablauf
- 16: Durchgängiger Steg
- 17: Abgesenkter Steg
- 18: Überströmkanal
- 19: Beheizter Flächenbereich
- 20: Dichtring
- 21: Dichtlippe
- 22: Eingesetzter Stutzen
- 23: Gekrümmte Fläche
- 24: Erweiterter Abstand
- 25: Weitere abgesenkte Stege
- 26: Abgewandter Wandbereich
- 27:
- 28: Hohlraumweite
- 29: Öffnung
- 30: Paßfläche
- 31: Lager Drosselklappenwelle
- 32: Stirnfläche Gehäusehalbschale

## Patentansprüche

1. Vorrichtung zur Gemischaufbereitung an Verbrennungskraftmaschinen, bei der ein Fluidstrom einen Strömungsquerschnitt (1) einer Bohrung (8) durchströmt und der Fluidstrom mittels eines betätigbaren, in einer Aufnahmebohrung (4) eines Gehäuses (2) schwenkbaren Drosselelementes dosierbar ist, wobei zwischen einer Wandung (9) der Bohrung (8) und dem Außenumfang des Gehäuses (2) in diesem Hohlräume (11) für ein Heiz- oder Kühlmedium ausgebildet sind, **dadurch gekennzeichnet, daß** zwischen den Hohlräumen (11) eines beheizbaren Flächenbereiches (19) in axialer Richtung abgesenkte Stege (17, 25) ausgebildet sind.

2. Vorrichtung gemäß Anspruch 1, **dadurch gekennzeichnet, daß** sich die Hohlräume (11) im Gehäuse (2) in Strömungsrichtung (13) des Fluidstromes erstrecken.

3. Vorrichtung gemäß Anspruch 1, **dadurch gekennzeichnet, daß** sich die Hohlräume (11) im Gehäuse (2) senkrecht zur Strömungsrichtung (13) des Fluidstroms erstrecken.

4. Vorrichtung gemäß Anspruch 1, **dadurch gekennzeichnet, daß** die Hohlräume (11) durch Stege (16) voneinander getrennt sind.

5. Vorrichtung gemäß Anspruch 1, **dadurch gekennzeichnet, daß** die abgesenkten Stege (17) zwischen den Hohlräumen (11) einen Überströmkanal (18) bilden, welche eine Passage des Heiz- oder Kühlmediums von einem Hohlraum (11) in benachbarte Hohlräume (11) zuläßt.

6. Vorrichtung gemäß Anspruch 1, **dadurch gekennzeichnet, daß** zwischen den Hohlräumen (11) eines beheizbaren Flächenbereiches (19) eine entsprechende Anzahl abgesenkter Stege (25) vorgesehen ist, durch welche ein Überströmen des Heiz- oder Kühlmediums erfolgt.

7. Vorrichtung gemäß Anspruch 1, **dadurch gekennzeichnet, daß** die Erstreckung des beheizbaren Flächenbereiches (19) durch am Außenumfang (7) des Gehäuses (2) aufgenommene oder angegossene bzw. angespritzte Zu- oder Abläufe (14, 15) definiert wird.

8. Vorrichtung gemäß Anspruch 1, **dadurch gekennzeichnet, daß** die Hohlräume (11) für das Heiz- oder Kühlmedium im Gehäuse (2) von einem Dichtelement (20, 21) derart abgedichtet sind, daß ein Überströmen des Heiz- oder Kühlmediums in radiale Richtung durch die Überströmkanäle (18) der abgesenkten Stege (17, 25) ermöglicht wird.

9. Vorrichtung gemäß Anspruch 7, **dadurch gekennzeichnet, daß** die Zu- und/oder Abläufe (14, 15) in das Gehäuse (2) integriert sind.

10. Verwendung der Vorrichtung gemäß einem oder mehrerer der vorhergehenden Ansprüche in einer Drosselklappenbohrung (8) des Ansaugtraktes einer Verbrennungskraftmaschine.

11. Verfahren zur Herstellung eines einer Vorrichtung nach einem der Ansprüche 1 bis 9, **dadurch gekennzeichnet, daß** beim Gießen oder Spritzen des Drosselklappengehäuses (2) Hohlräume (11) für die Passage eines Heiz- oder Kühlmediums ausgebildet werden, die sich in Strömungsrichtung (13) eines Fluidstroms erstrecken.

## Claims

1. Device for mixture preparation on internal combustion engines, in which a fluid stream flows through a flow cross section (1) of a bore (8), and the fluid stream can be metered by means of an actuable throttle element pivotable in a reception bore (4) of a housing (2), cavities (11) for a heating or cooling medium being formed in the housing between a wall (9) of the bore (8) and the outer circumference of the housing (2), **characterized in that** webs (17, 25) lowered in the axial direction are formed between the cavities (11) of a heatable surface region (19).

2. Device according to Claim 1, **characterized in that** the cavities (11) extend in the housing (2) in the direction of flow (13) of the fluid stream.

3. Device according to Claim 1, **characterized in that** the cavities (11) extend in the housing (2) perpendicularly with respect to the direction of flow (13) of the fluid stream.

4. Device according to Claim 1, **characterized in that** the cavities (11) are separated from one another by webs (16).

5. Device according to Claim 1, **characterized in that** the lowered webs (17) form between the cavities (11) an overflow duct (18) which allows the heating or cooling medium to pass from one cavity (11) into adjacent cavities (11).

6. Device according to Claim 1, **characterized in that** between the cavities (11) of a heatable surface region (19) a corresponding number of lowered webs (25) are provided by means of which an overflow of the heating or cooling medium takes place.

7. Device according to Claim 1, **characterized in that** the extent of the heatable surface region (19) is defined by inflows or outflows (14, 15) received or cast or injection-moulded on the outer circumference (7) of the housing (2).

8. Device according to Claim 1, **characterized in that** the cavities (11) for the heating or cooling medium are sealed off in the housing (2) by a sealing element (20, 21) in such a way that an overflow of the heating or cooling medium in the radial direction through the overflow ducts (18) of the lowered webs (17, 25) is made possible.

9. Device according to Claim 7, **characterized in that** the inflows and/or outflows (14, 15) are integrated into the housing (2).

10. Use of the device according to one or more of the preceding claims in a throttle valve bore (8) of the intake tract of an internal combustion engine.

11. Method for producing a device according to one of Claims 1 to 9, **characterized in that**, during the casting or injection-moulding of the throttle valve housing (2), cavities (11) for the passage of a heating or cooling medium are formed, which extend in the direction of flow (13) of a fluid stream.

## Revendications

1. Dispositif pour la préparation du mélange dans des moteurs à combustion interne, dans lequel un courant de fluide traverse une section d'écoulement (1) d'un alésage (8) et le courant de fluide peut être dosé au moyen d'un élément d'étranglement actionné et pivotant dans un alésage de réception (4) d'un boîtier (2), avec des espaces creux (11) pour un fluide de chauffage ou de refroidissement formés dans le boîtier entre une paroi (9) de l'alésage (8) et la périphérie extérieure du boîtier (2),
**caractérisé en ce que**
des nervures surbaissées (17, 25) sont formées en direction axiale entre les espaces creux (11) d'une zone de surface chauffante (19).

2. Dispositif selon la revendication 1,
**caractérisé en ce que**
les espaces creux (11) s'étendent dans le boîtier (2) dans la direction d'écoulement (13) du courant de fluide.

3. Dispositif selon la revendication 1,
**caractérisé en ce que**
les espaces creux (11) s'étendent dans le boîtier (2) perpendiculairement à la direction d'écoulement (13) du courant de fluide.

4. Dispositif selon la revendication 1,
**caractérisé en ce que**
les espaces creux (11) sont séparés les uns des autres par des nervures (16).

5. Dispositif selon la revendication 1,
**caractérisé en ce que**
les nervures surbaissées (17) forment entre les espaces creux (11) un canal de débordement (18), qui permet un passage du fluide de chauffage ou de refroidissement d'un espace creux (11) dans des espaces creux voisins (11).

6. Dispositif selon la revendication 1,
**caractérisé en ce qu'**
entre les espaces creux (11) d'une zone de surface chauffante (19), un nombre correspondant de nervures surbaissées (25), provoquent un débordement du fluide de chauffage ou de refroidissement.

7. Dispositif selon la revendication 1,
**caractérisé en ce que**
l'extension de la zone de surface chauffante (19) est définie par des arrivées ou des départs (14, 15) appliqués ou moulés ou projetés sur la périphérie extérieure (7) du boîtier (2).

8. Dispositif selon la revendication 1,
**caractérisé en ce que**
les espaces creux (11) pour le fluide de chauffage ou de refroidissement dans le boîtier (2) sont rendus étanches par un élément d'étanchéité (20, 21), de telle manière qu'un débordement du fluide de chauffage ou de refroidissement en direction radiale soit possible par les canaux de débordement (18) des nervures surbaissées (17, 25).

9. Dispositif selon la revendication 7,
**caractérisé en ce que**
les arrivées et/ou les départs (14, 15) sont intégrés dans le boîtier (2).

10. Utilisation du dispositif selon une ou plusieurs des revendications précédentes, dans un alésage de clapet d'étranglement (8) de la ligne d'aspiration d'un moteur à combustion interne.

11. Procédé pour fabriquer un dispositif selon l'une quelconque des revendications 1 à 9,
**caractérisé en ce que**
lors de la coulée ou de la projection du boîtier (2) de clapet d'étranglement, on forme des espaces creux (11) pour le passage d'un fluide de chauffage ou de refroidissement, qui s'étendent dans la direction d'écoulement (13) d'un courant de fluide.
